# FASCICULE DE BREVET EUROPEEN

(11) **EP 3 201 492 B1**
(45) Date de publication et mention de la délivrance du brevet: **16.11.2022**
(21) Numéro de dépôt: 15775775.8
(22) Date de dépôt: 18.09.2015
(51) Int. Cl.: F16H 1/22

(54) **RÉDUCTEUR DE VITESSE À DEUX LIGNES INTERMÉDIAIRES DE TRANSMISSION**
UNTERSETZUNGSGETRIEBE MIT ZWEI ZWISCHENLIEGENDEN GETRIEBESTRÄNGEN
SPEED REDUCTION GEARBOX WITH TWO INTERMEDIATE TRANSMISSION LINES

(30) Priorité: 30.09.2014 FR 1459282
(43) Date de publication de la demande: 09.08.2017
(73) Titulaire: Safran Transmission Systems, 92700 Colombes (FR)
(72) Inventeur: FERAUD, Benjamin, F-92500 Rueil-Malmaison (FR); AMIET, Maxime, 92270 Bois-Colombes (FR); BECK, Guillaume, F-60500 Chantilly (FR); BECQUERELLE, Samuel, Raymond, Germain, F-78180 Montigny-le-Bretonneux (FR); MATHIEU, Antoine, F-92400 Courbevoie (FR); MORELLI, Boris, F-75014 Paris (FR)
(74) Mandataire: Gevers & Orès
(86) Numéro de dépôt international: PCT/FR2015/052513
(87) Numéro de publication internationale: WO 2016/051045

(56) Documents cités:
- EP-A1- 0 636 813
- WO-A1-2013/150229
- US-A- 3 772 934

## Description

### DOMAINE TECHNIQUE

La présente invention concerne un réducteur de vitesse à deux lignes intermédiaires de transmission, en particulier pour une turbomachine.

### ETAT DE L'ART

L'état de l'art comprend notamment les documents US-A-3,772,934, EP-A1-0 636 813 et WO-A1-2013/150229.

Une turbomachine peut comprendre un ou plusieurs réducteurs mécaniques de vitesse. C'est notamment le cas d'un turbopropulseur dont l'hélice est entraînée en rotation par un arbre de turbine par l'intermédiaire d'un réducteur de vitesse.

Il existe plusieurs types de réducteur de vitesse tels que les réducteurs à trains épicycloïdaux, à chaines, à vis sans fin, à lignes intermédiaires de transmission, etc. La présente invention concerne essentiellement un réducteur à lignes intermédiaires de transmission (aussi appelé réducteur composé ou « compound »).

Dans la technique actuelle, un réducteur de vitesse de ce type comprend une ligne d'entrée et une ligne de sortie entraînée par la ligne d'entrée par l'intermédiaire de deux lignes intermédiaires de transmission. La puissance transmise par la ligne d'entrée est séparée entre les lignes intermédiaires avant d'être transférée à la ligne de sortie. Les lignes intermédiaires de transmission sont parallèles et comportent en général chacune un arbre portant un pignon d'entrée engrainé avec la ligne d'entrée et un pignon de sortie engrainé avec la ligne de sortie. En jouant sur le nombre de dents des différents pignons, il est possible d'obtenir un rapport de réduction entre la ligne d'entrée et la ligne de sortie. Cette architecture permet une réduction de vitesse importante dans un espace confiné et avec une masse maîtrisée.

Par définition, un réducteur de ce type est un système hyperstatique. Sans aménagement particulier, il est possible qu'une ligne intermédiaire passe la majorité de la puissance moteur, tandis que l'autre ligne intermédiaire ne passe pratiquement pas de puissance.

### EXPOSE DE L'INVENTION

La présente invention propose notamment d'adjoindre à un réducteur de ce type des moyens de répartition de charges pour s'assurer que la moitié de la puissance transite par chacune des lignes intermédiaires du réducteur.

L'invention propose un réducteur de vitesse pour une turbomachine, telle qu'un turbopropulseur, comprenant une ligne d'entrée et une ligne de sortie entraînée par la ligne d'entrée par l'intermédiaire desdites lignes intermédiaires, ces lignes intermédiaires étant sensiblement parallèles, caractérisé en ce qu'il comprend des moyens de répartition de charges entre lesdites lignes intermédiaires, ces moyens de répartition de charges comportant des moyens rotulants d'accouplement en rotation d'une extrémité de la ligne d'entrée, et des moyens d'amortissement à huile des déplacements radiaux d'une extrémité opposée de la ligne d'entrée.

Selon l'invention, la ligne d'entrée est susceptible de se déplacer radialement (vis-à-vis de son axe longitudinal). Ceci est rendu possible par le fait qu'une des extrémités de la ligne d'entrée est montée rotulante, par rapport par exemple à un arbre moteur. L'extrémité opposée de la ligne d'entrée peut alors se déplacer en direction radiale, ces déplacements étant amortis par de l'huile. Ces moyens rotulants et d'amortissement forment des moyens de répartition de charges, qui fonctionnent de la façon suivante. Si une des lignes intermédiaires est plus chargée, cela veut dire que le couple transitant par cette ligne est plus important que sur l'autre ligne, donc l'effort engendré par ce couple sur le pignon de la ligne d'entrée est plus important d'un côté que de l'autre. Une force sera donc appliquée sur le pignon d'entrée, ce qui provoquera le déplacement radial de la ligne d'entrée. Ce déplacement permet de rééquilibrer les jeux au niveau de la ligne d'entrée. A l'équilibre, les efforts sur le pignon dus aux couples sur les lignes intermédiaires s'annulent, ce qui veut dire que les couples sur les lignes intermédiaires sont égaux.

Le réducteur selon l'invention peut comprendre une ou plusieurs des caractéristiques suivantes, prises isolément ou en combinaison les unes avec les autres :
- les moyens d'amortissement sont configurés pour autoriser des déplacements de la ligne d'entrée dans une direction sensiblement perpendiculaire à un plan passant sensiblement par des axes des lignes intermédiaires,
- la ligne d'entrée est guidée en rotation par un palier à roulement, ce palier comportant une bague externe qui est montée coulissante radialement dans une glissière et qui définit une chambre d'huile d'amortissement avec des parois de ladite glissière,
- ladite bague a une périphérie interne de forme annulaire et définissant un chemin de roulement, et une périphérie externe de forme générale carrée ou rectangulaire dont des bords latéraux parallèles et opposés coopèrent par glissement avec des parois latérales de la glissière,
- ladite chambre d'huile comprend une poche supérieure d'huile définit entre la bague externe et une paroi supérieure de la glissière, et une poche inférieure d'huile définit entre la bague externe et une paroi inférieure de la glissière,
- la bague externe comprend une gorge périphérique externe qui assure la communication fluidique entre lesdites poches supérieure et inférieure,
- la bague externe porte un joint annulaire avant d'étanchéité et un joint annulaire arrière d'étanchéité, qui coopèrent respectivement avec des parois avant et arrière de ladite glissière,
- la glissière est fixée à un carter du réducteur,
- les moyens rotulants et les moyens d'amortissement sont montés de part et d'autre d'un pignon de la ligne d'entrée.

La présente invention concerne également une turbomachine, caractérisée en ce qu'elle comporte au moins un réducteur tel que décrit ci-dessus. Le réducteur peut comprendre une ligne de sortie configurée pour entraîner une hélice non carénée de la turbomachine.

La turbomachine est de préférence un turbopropulseur d'aéronef.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue très schématique d'un réducteur de vitesse à deux lignes intermédiaires de transmission, vu de côté,
- la figure 2 est une vue très schématique d'un réducteur de vitesse à deux lignes intermédiaires de transmission, vu de face,
- les figures 3 et 4 sont des vues schématiques partielles et de face d'un réducteur du type précité, la figure 3 représentant une répartition non homogène des charges entre les lignes intermédiaires et la figure 4 représentant une répartition homogène des charges entre les lignes intermédiaires,
- la figure 5 est une vue très schématique d'une ligne d'entrée équipée de moyens de répartition de charges selon l'invention,
- la figure 6 est une vue schématique en coupe axiale d'une ligne d'entrée équipée de moyens de répartition de charges, selon un mode de réalisation de l'invention, et
- la figure 7 est une vue en coupe selon la ligne II-II de la figure 6.

### DESCRIPTION DETAILLEE

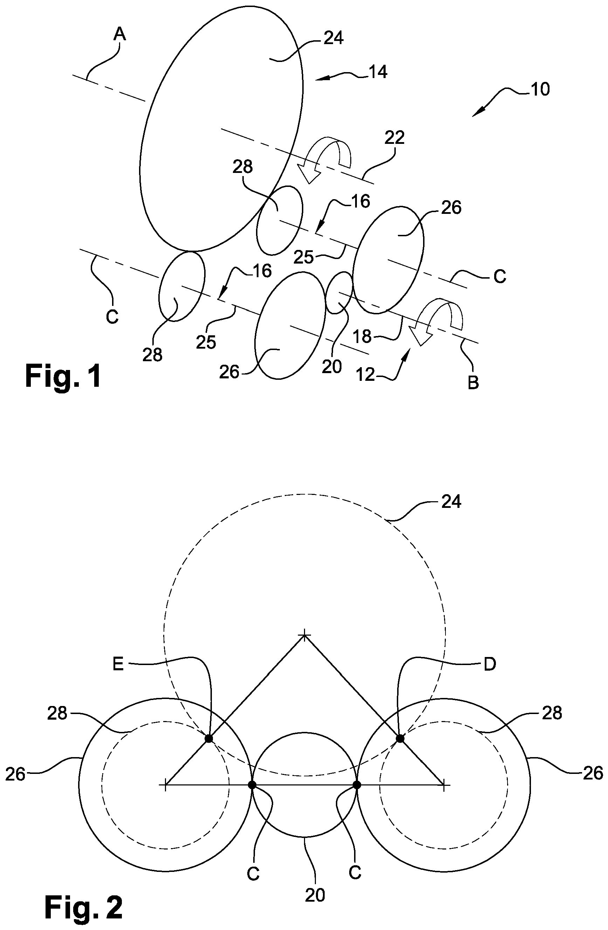

La figure 1 représente de manière très schématique un réducteur 10 de vitesse à deux lignes intermédiaires de transmission, ce réducteur 10 comportant pour l'essentiel quatre parties : une ligne d'entrée 12, une ligne de sortie 14 et deux lignes intermédiaires de transmission 16 qui sont entrainées par la ligne d'entrée 12 et entraînent à leur tour la ligne de sortie 14.

Les différentes parties 12, 14, 16 du réducteur sont en général montées dans un carter du réducteur qui n'est pas représenté ici, ce carter comportant un premier orifice pour le passage de la ligne d'entrée et son raccordement à un premier élément d'une turbomachine par exemple, et un second orifice pour le passage de la ligne de sortie et son raccordement à un second élément de la turbomachine. Le premier élément est par exemple un arbre de turbine de la turbomachine et le second élément est un arbre d'entraînement d'une hélice de cette turbomachine dans le cas où cette dernière est un turbopropulseur.

La ligne d'entrée 12 comprend un arbre 18 portant un pignon 20 à denture externe. Le pignon 20 et l'arbre 18 sont coaxiaux et tournent autour d'un même axe noté B.

La ligne de sortie 14 comprend un arbre 22 portant un pignon 24 à denture externe. Le pignon 24 et l'arbre 22 sont coaxiaux et tournent autour d'un même axe noté A. Ils tournent ici dans le même sens de rotation que le pignon 20 et l'arbre 18 de la ligne d'entrée.

Les lignes d'entrée et de sortie 12, 14 sont parallèles. Leurs axes de rotation A, B sont donc parallèles.

Les lignes intermédiaires de transmission 16 sont sensiblement parallèles et identiques. Chaque ligne 16 comporte un arbre 25 qui porte un pignon d'entrée 26 à une première extrémité et un pignon de sortie 28 à une seconde extrémité. Les pignons de sortie 28 sont engrenés avec le pignon 24 de la ligne de sortie 14. Les pignons d'entrée 26 sont engrenés avec le pignon 20 de la ligne d'entrée 12. Les pignons 26, 28 sont à dentures externes. Chaque arbre 25 et ses pignons 26, 28 sont coaxiaux et tournent autour d'un même axe noté C, parallèle aux axes A et B.

Comme expliqué dans ce qui précède, ce type de réducteur 10 est un système hyperstatique et il est possible qu'une ligne intermédiaire 16 passe la majorité de la puissance moteur, tandis que l'autre ligne intermédiaire ne passe pratiquement pas de puissance. Comme on le voit en figure 2, cette mauvaise répartition de puissance ou de charges est notamment due au fait que, bien que les pignons 26 soient en contact aux points C avec le pignon 20, et que le pignon 28 de l'une des lignes intermédiaires soit en contact au point D avec le pignon 24, il est difficile de s'assurer de l'absence de jeu en E, entre le pignon 24 et le pignon 28 de l'autre ligne intermédiaire.

L'invention propose une solution à ce problème en équipant le réducteur 10 de moyens de répartition des charges entre les lignes intermédiaires 16.

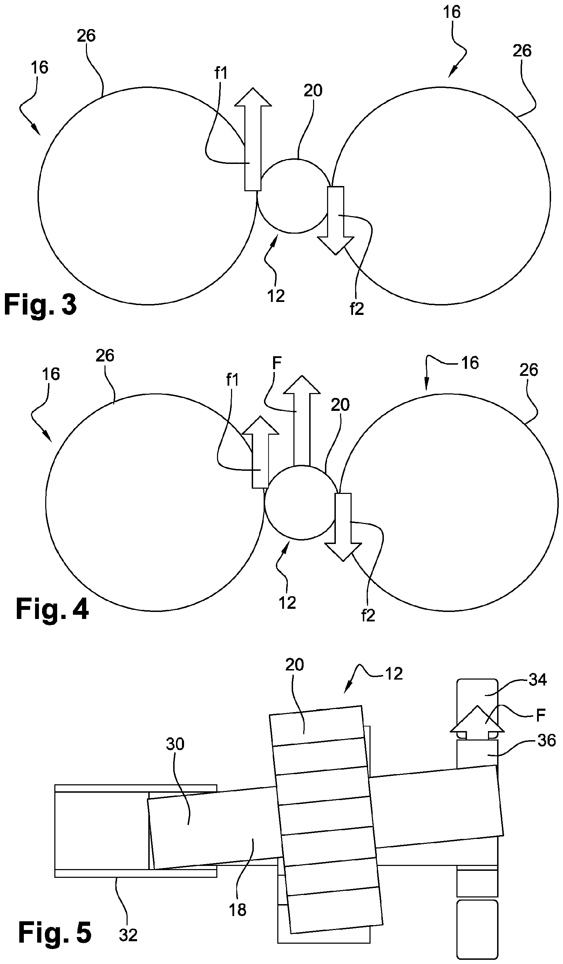

Le principe général de l'invention est représenté aux figures 3 à 5 et les figures 6 et 7 représentent un mode de réalisation de l'invention.

Selon l'invention, l'arbre 18 de la ligne d'entrée 12 est susceptible de se déplacer radialement (vis-à-vis de son axe longitudinal). Ceci est rendu possible par le fait qu'une de ses extrémités est montée rotulante (figure 5), par rapport par exemple à l'arbre de la turbine. L'extrémité de la l'arbre 18 comprend par exemple des cannelures 30 rotulantes engagées dans des cannelures complémentaires d'un manchon 32 de raccordement de la ligne d'entrée du réducteur à l'arbre de la turbine. On entend ici par déplacements radiaux, des pivotements de la ligne d'entrée 12 autour d'un point situé au niveau de son extrémité rotulante.

L'extrémité opposée de l'arbre 18 de la ligne d'entrée 12 peut ainsi se déplacer en direction radiale, ces déplacements étant amortis par de l'huile 34.

Si une des lignes intermédiaires 16 est plus chargée (figure 3), cela veut dire que le couple transitant par cette ligne est plus important que sur l'autre ligne, donc l'effort f1 engendré par ce couple sur le pignon 20 de la ligne d'entrée est plus important d'un côté que de l'autre. Une force F sera donc appliquée sur le pignon 20 de la ligne d'entrée, ce qui provoquera le déplacement de la ligne d'entrée. Ce déplacement permet de rééquilibrer les jeux au niveau de la ligne d'entrée. A l'équilibre, les efforts f1, f2 sur le pignon 20 dus aux couples sur les lignes intermédiaires s'annulent, ce qui veut dire que les couples sur les lignes intermédiaires sont égaux.

Avantageusement, les moyens d'amortissement à huile 34 sont associés à un palier à roulement 36 de guidage de l'arbre 18 de la ligne d'entrée 12.

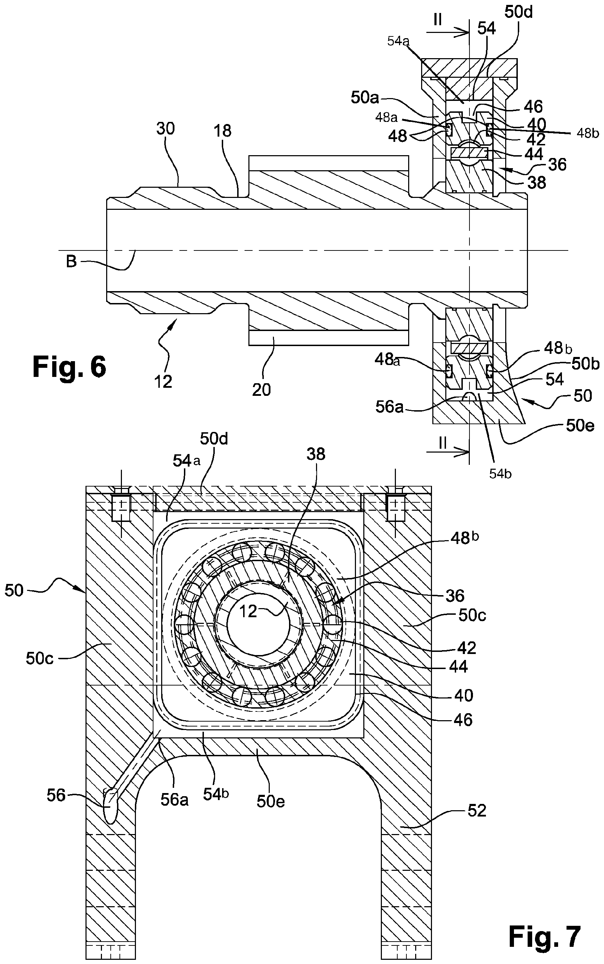

Les figures 6 et 7 représentent un exemple plus concret de réalisation de l'invention, dans lequel les éléments décrits dans ce qui précède sont désignés par les mêmes chiffres de référence.

Le palier à roulement 36 est ici du type à billes et comprend deux bagues, respectivement interne 38 et externe 40, entre lesquelles s'étend une rangée de billes 42 maintenues par une cage annulaire 44. La bague interne est montée fixement sur une extrémité de l'arbre 18 de la ligne d'entrée 12, opposée à son extrémité comportant les cannelures rotulantes 30.

La bague externe 40 a une forme spécifique à l'invention. Elle a une périphérie interne de forme annulaire et définissant un chemin de roulement des billes 42, et une périphérie externe de forme générale carrée ou rectangulaire. La bague externe 40 comprend à sa périphérie externe une gorge annulaire 46 qui débouche radialement vers l'extérieur par rapport à l'axe B de la ligne d'entrée.

La bague externe 40 comprend en outre une rainure annulaire sur sa face avant de logement d'un premier joint annulaire d'étanchéité 48a, et une rainure annulaire sur sa face arrière de logement d'un second joint annulaire d'étanchéité 48b. Les joints 48 sont similaires et coaxiaux.

La bague externe 40 est monté coulissante en direction radiale, par rapport à l'axe B, dans une cavité d'une glissière 50, qui est porté par un élément de support 52 de l'arbre 18 de la ligne d'entrée. Cet élément de support 52 peut être fixé directement sur le carter du réducteur, qui n'est pas ici représenté.

La glissière 50 a une forme générale parallélépipédique et comprend une paroi avant 50a, une paroi arrière 50b, deux parois latérales 50c, une paroi supérieure 50d et une paroi inférieure 50e, ces parois 50a-50e définissant entre elles la cavité précitée dans laquelle est logée la bague externe 40 du palier 36.

Comme on le voit dans les dessins, les bords latéraux de la bague externe 40 coopèrent par glissement avec les parois latérales 50c de la glissière. Les faces avant et arrière de la bague externe 40 coopèrent également par glissement avec les parois avant 50a et arrière 50b de la glissière, les joints 48 assurant une étanchéité, en particulier en direction radiale, entre la bague 40 et ses parois 50a, 50b.

En position d'équilibre représentée dans les dessins, la bague externe 40 est située sensiblement au milieu de la cavité en direction verticale qui est la direction sensiblement perpendiculaire à un plan (en général horizontal) passant sensiblement par les axes C des lignes intermédiaires 16. Dans cette position, la bague externe 40 délimite avec la paroi supérieure 50d une poche 54 supérieure 54a remplie d'huile et avec la paroi inférieure 50e une poche 54 inférieure 54b remplie d'huile. Ces poches 54 communiquent entre elles par l'intermédiaire de la gorge périphérique 46 de la bague 40.

Les poches 54 et la gorge périphérique 46 forment une chambre d'huile d'amortissement des déplacements radiaux, et en particulier verticaux, de l'arbre 18 de la ligne d'entrée 12. L'huile est amenée dans cette chambre par un conduit 56 d'huile qui est ici formé dans l'élément de support 52 et la glissière 50. Ce conduit 56 a une extrémité 56a qui débouche dans la chambre et une extrémité opposée qui est raccordée à des moyens appropriés d'alimentation en huile.

La chambre peut être alimentée en huile à une pression prédéterminée pour assurer l'amortissement des déplacements précités. En variante, la chambre pourrait ne pas être alimentée en huile (par l'intermédiaire du conduit 56) mais simplement contenir de l'huile à une pression prédéterminée. La pression de l'huile est de l'ordre de 1 bar par exemple.

L'invention permet d'utiliser l'huile pour lubrifier la glissière 50 et réduire ainsi le risque de grippage de la liaison coulissante entre la bague externe 40 et la glissière.

L'invention fonctionne comme indiqué dans ce qui précède en relation avec les figures 3 et 4.

L'utilisation d'une chambre d'huile en tant qu'amortisseur a les avantages suivants : gain en fiabilité (peu de risque de grippage de la glissière, peu de risque d'excitation dynamique, etc.), meilleure conception, gain en masse (équilibrage parfait, pas besoin de surdimensionner les pignons des lignes intermédiaires pour prendre en compte un déséquilibrage de charge, etc.), gain en coût, etc.

## Revendications

1. Réducteur de vitesse (10) à deux lignes intermédiaires de transmission (16), en particulier pour une turbomachine, comprenant une ligne d'entrée (12) et une ligne de sortie (14) entraînée par la ligne d'entrée (12) par l'intermédiaire desdites lignes intermédiaires (16), ces lignes intermédiaires (16) étant sensiblement parallèles, le réducteur de vitesse (10) comprenant en outre des moyens de répartition de charges entre lesdites lignes intermédiaires (16), **caractérisé en ce que** ces moyens de répartition de charges comportent des moyens rotulants (30) d'accouplement en rotation d'une extrémité de la ligne d'entrée (12), et des moyens (40, 50) d'amortissement à huile des déplacements radiaux d'une extrémité opposée de la ligne d'entrée (12).

2. Réducteur (10) selon la revendication 1, dans lequel les moyens d'amortissement (40, 50) sont configurés pour autoriser des déplacements de la ligne d'entrée (12) dans une direction sensiblement perpendiculaire à un plan passant sensiblement par des axes (C) des lignes intermédiaires (16).

3. Réducteur (10) selon la revendication 1 ou 2, dans lequel la ligne d'entrée (12) est guidée en rotation par un palier à roulement (36), ce palier (36) comportant une bague externe (40) qui est montée coulissante radialement dans une glissière (50) et qui définit une chambre d'huile d'amortissement avec des parois (50a-50e) de ladite glissière (50).

4. Réducteur (10) selon la revendication 3, dans lequel ladite bague (40) a une périphérie interne de forme annulaire et définissant un chemin de roulement, et une périphérie externe de forme générale carrée ou rectangulaire dont des bords latéraux parallèles et opposés coopèrent par glissement avec des parois latérales (50c) de la glissière (50).

5. Réducteur (10) selon la revendication 4, dans lequel ladite chambre d'huile comprend une poche (54) d'huile supérieure (54a) définit entre la bague externe (40) et une paroi supérieure (50d) de la glissière (50), et une poche (54) d'huile inférieure (54b) définit entre la bague externe (40) et une paroi inférieure (50e) de la glissière (50).

6. Réducteur (10) selon la revendication 5, dans lequel la bague externe (40) comprend une gorge périphérique externe (46) qui assure la communication fluidique entre lesdites poches (54) supérieure et inférieure.

7. Réducteur (10) selon l'une des revendications 3 à 6, dans lequel la bague externe (40) porte un joint annulaire (48) avant (48a) d'étanchéité et un joint annulaire (48) arrière (48b) d'étanchéité, qui coopèrent respectivement avec des parois avant (50a) et arrière (50b) de ladite glissière (50).

8. Réducteur (10) selon l'une des revendications 3 à 7, dans lequel la glissière (50) est fixée à un carter du réducteur.

9. Réducteur (10) selon l'une des revendications précédentes, dans lequel les moyens rotulants (30) et les moyens d'amortissement (40, 50) sont montés de part et d'autre d'un pignon (20) de la ligne d'entrée (12).

10. Turbomachine, **caractérisée en ce qu'**elle comporte au moins un réducteur (10) selon l'une des revendications précédentes.

## Patentansprüche

1. Untersetzungsgetriebe (10) mit zwei zwischenliegenden Getriebesträngen (16), insbesondere für eine Turbomaschine, umfassend einen Eingangsstrang (12) und einen Ausgangsstrang (14), der über den Eingangsstrang (12) mithilfe der zwischenliegenden Stränge (16) angetrieben wird, wobei diese zwischenliegenden Stränge (16) im Wesentlichen parallel sind, wobei das Untersetzungsgetriebe (10) weiter Lastverteilungsmittel zwischen den zwischenliegenden Strängen (16) umfasst, **dadurch gekennzeichnet, dass** diese Lastverteilungsmittel Schwenkmittel (30) zur Drehkopplung eines Endes des Eingangsstrangs (12) und Öldämpfungsmittel (40, 50) der radialen Bewegungen eines dem Eingangsstrang (12) gegenüberliegenden Endes umfassen.

2. Getriebe (10) nach Anspruch 1, wobei die Dämpfungsmittel (40, 50) konfiguriert sind, um Bewegungen des Eingangsstrangs (12) in einer im Wesentlichen senkrechten Richtung zu einer Ebene zu erlauben, die im Wesentlichen durch Achsen (C) der zwischenliegenden Stränge (16) verläuft.

3. Getriebe (10) nach Anspruch 1 oder 2, wobei der Eingangsstrang (12) durch ein Rolllager (36) in Drehung versetzt wird, wobei dieses Lager (36) einen äußeren Ring (40) umfasst, der radial gleitend in einer Schiene (50) montiert ist und der mit Wänden (50a-50e) der Schiene (50) eine Öldämpfungskammer definiert.

4. Getriebe (10) nach Anspruch 3, wobei der Ring (40) einen ringförmigen Innenumfang, der einen Rollweg definiert, und einen allgemein quadratischen oder rechteckigen Außenumfang aufweist, dessen parallele und gegenüberliegende Seitenkanten durch Gleiten mit Seitenwänden (50c) der Schiene (50) zusammenwirken.

5. Getriebe (10) nach Anspruch 4, wobei die Ölkammer eine zwischen dem äußeren Ring (40) und einer oberen Wand (50d) der Schiene (50) definierte obere (54a) Öltasche (54) und eine zwischen dem äußeren Ring (40) und einer unteren Wand (50e) der Schiene (50) definierte untere (54b) Öltasche (54) umfasst.

6. Getriebe (10) nach Anspruch 5, wobei der äußere Ring (40) eine äußere Umfangsnut (46) umfasst, die die Fluidkommunikation zwischen der oberen und unteren Tasche (54) gewährleistet.

7. Getriebe (10) nach einem der Ansprüche 3 bis 6, wobei der äußere Ring (40) eine vordere (48a) ringförmige Dichtung (48) und eine hintere (48b) ringförmige Dichtung (48) umfasst, die mit der vorderen (50a) bzw. der hinteren (50b) Wand der Schiene (50) zusammenwirken.

8. Getriebe (10) nach einem der Ansprüche 3 bis 7, wobei die Schiene (50) an einem Gehäuse des Getriebes befestigt ist.

9. Getriebe (10) nach einem der vorstehenden Ansprüche, wobei die Schwenkmittel (30) und die Dämpfungsmittel (40, 50) auf beiden Seiten eines Ritzels (20) des Eingangsstrangs (12) montiert sind.

10. Turbomaschine, **dadurch gekennzeichnet, dass** sie mindestens ein Getriebe (10) nach einem der vorstehenden Ansprüche umfasst.

## Claims

1. Speed reduction gear (10) comprising two intermediate transmission lines (16), in particular for a turbine engine, comprising an input line (12) and an output line (14) that is driven by the input line (12) via said intermediate transmission lines (16), said intermediate transmission lines (16) being substantially parallel, the reduction gear (10) comprises means for distributing loads between said intermediate lines (16), **characterized in that** said load distribution means comprise swivelling coupling means (30) for rotatably coupling one end of the input line (12), and oil-damping means (40, 50) for damping radial movements of an opposite end of the input line (12).

2. Reduction gear (10) according to claim 1, wherein the damping means (40, 50) are designed to allow the input line (12) to move in a direction substantially perpendicular to a plane passing substantially through axes (C) of the intermediate lines (16).

3. Reduction gear (10) according to either claim 1 or claim 2, wherein the input line (12) is rotated by an antifriction bearing (36), said bearing (36) comprising an outer race (40) that is mounted so as to be radially slidable in a slide (50) and that defines a damping oil chamber together with walls (50a-50e) of said slide (50).

4. Reduction gear (10) according to claim 3, wherein said race (40) has an annular inner periphery that defines a raceway, and a generally square or rectangular outer periphery, the parallel and opposing lateral edges of which cooperate in a sliding manner with the lateral walls (50c) of the slide (50).

5. Reduction gear (10) according to claim 4, wherein said oil chamber comprises an upper (54a) oil cavity (54) delimited between the outer race (40) and an upper wall (50d) of the slide (50), and a lower (54b) oil cavity (54) delimited between the outer race and a lower wall (50e) of the slide (50).

6. Reduction gear (10) according to claim 5, wherein the outer race (40) comprises an outer peripheral groove (46) that provides fluid communication between said upper and lower cavities (54).

7. Reduction gear (10) according to any of claims 3 to 6, wherein the outer race (40) has a front (48a) annular seal (48) and a rear (448b) annular seal (48) which cooperate with front (50a) and rear (50b) walls, respectively, of said slide (50).

8. Reduction gear (10) according to any of claims 3 to 7, wherein the slide (50) is fixed to a housing of the reduction gear.

9. Reduction gear (10) according to any of the preceding claims, wherein the swivelling means (30) and the damping means (40, 50) are mounted on either side of a gear (20) of the input line (12).

10. Turbine engine, **characterised in that** it comprises at least one reduction gear (10) according to any of the preceding claims.
